# FASCICULE DE BREVET EUROPEEN

(11) **EP 1 365 323 B1**
(45) Date de publication et mention de la délivrance du brevet: **18.09.2013**
(21) Numéro de dépôt: 03291226.3
(22) Date de dépôt: 23.05.2003
(51) Int. Cl.: G06F 9/54, G06F 9/455

(54) **Procédé d'échange d'informations entre systèmes d'exploitation cohabitant sur un même ordinateur**
Verfahren zum Austausch von Informationen zwischen Betriebssystemen auf dem selben Rechner
Method to exchange information between operating systems hosted on a same computer

(30) Priorité: 24.05.2002 FR 0206364
(43) Date de publication de la demande: 26.11.2003
(73) Titulaire: Bull S.A.S., 78340 Les Clayes sous Bois (FR)
(72) Inventeur: Baudry, Robert, 78100 St Germain en Laye (FR); Lecampion, Michel, 27120 Mesnilles (FR); Tuilliere, Michel, 92340 Bourg-la-Reine (FR)
(74) Mandataire: Bonnet, Michel

(56) Documents cités:
- EP-A- 1 162 536
- WO-A-97/01944
- US-A- 4 993 017
- EMMANUEL CHAILLOUX: "Systèmes à mémoire partagée" INTERNET DOCUMENT, [en ligne] 15 novembre 1998 (1998-11-15), XP002240830 Extrait de l'Internet: <URL:http://www.pps.jussieu.fr/~emmanuel/P ublic/enseignement/POD_98_WWW/pw6/node1.ht ml> [extrait le 2003-05-12]
- MARC SHAPIRO: "Soul: An Object-Oriented OS Framework for Object Support" INTERNET DOCUMENT: WORKSHOP ON OPERATING SYSTEMS FOR THE NINETIES AND BEYOND PUBLISHED BY SPRINGER-VERLAG, [en ligne] 1 mai 1991 (1991-05-01), XP002240831 Extrait de l'Internet: <URL:http://citeseer.nj.nec.com/rd/0%2C123 278%2C1%2C0.25%2CDownload/http://citeseer. nj.nec.com/cache/papers/cs/5674/ftp:zSzzSz ftp.eurecom.frzSzpubzSzoszSzSOUL-os90b.ps. gz/shapiro91soul.ps.gz> [extrait le 2003-05-09]
- BOB BECK: "AAMP: A MULTIPROCESSOR APPROACH FOR OPERATING SYSTEM AND APPLICATION MIGRATION" OPERATING SYSTEMS REVIEW (SIGOPS), ACM HEADQUARTER. NEW YORK, US, vol. 24, no. 2, 1 avril 1990 (1990-04-01), pages 41-55, XP000140419

## Description

La présente invention concerne un procédé d'échange d'informations entre des processus, tâches, ou applications informatiques exécutées par des systèmes d'exploitation différents cohabitant sur une même machine informatique ou une même plate-forme matérielle.

Dans de nombreux cas, il peut être utile de faire cohabiter sur un même ordinateur des applications informatiques provenant de sources ou d'époques différentes, ou programmées en fonction d'un système d'exploitation différent.

Un système d'exploitation peut être décrit comme une entité logicielle servant d'intermédiaire entre des applications informatiques et les ressources matérielles qu'elles utilisent. Le système d'exploitation est accessible depuis une application par un ensemble d'instructions, parfois appelé « décor intérieur », qui fonctionnent selon un ensemble de règles définissant l'usage des ressources d'un ordinateur, les fonctionnalités accessibles à un opérateur ou à un langage de programmation, et le mode d'utilisation de ces fonctionnalités.

Un tel ordinateur peut être constitué d'une seule machine indépendante, ou de plusieurs machines ou parties de machines coopérant ensemble pour constituer une plate-forme matérielle globale, par exemple à travers une architecture distribuée regroupant plusieurs processeurs, ou plusieurs ordinateurs travaillant en coopération et se partageant ou se répartissant entre eux certaines de leurs ressources.

Par exemple, au fur et à mesure de l'évolution ou du renouvellement des matériels informatiques utilisés pour une application informatique, les normes de fonctionnement des matériels disponibles changent, et en particulier à travers leurs systèmes d'exploitation. Ceux-ci peuvent ainsi être peu ou pas compatibles entre plusieurs versions différentes, ou d'un modèle d'ordinateur à l'autre.

Lorsque certaines de ces applications existent et sont utilisées depuis un certain temps, ou par un certain nombre d'utilisateurs ou d'entreprises, il peut être moins coûteux en temps comme en argent de conserver une application ancienne ou particulièrement bien adaptée à un besoin.

Certaines applications peuvent également n'être disponibles que sous un certain système d'exploitation, alors que les besoins ou les matériels qu'elles gèrent existent auprès d'ordinateurs qui utilisent un autre système d'exploitation.

Il est donc utile de pouvoir faire cohabiter une application exécutée par un certain système d'exploitation avec d'autres applications exécutées par un ou plusieurs autres systèmes d'exploitations, et de les faire communiquer pour interagir entre elles lorsqu'elles traitent des données ou des objets logiciels communs.

Pour des besoins de standardisation des applications, de formation du personnel, ou de stratégie commerciale, il est également utile de pouvoir disposer d'un même système d'exploitation, qualifié de « portable », sur des machines de types différents. Plutôt que de programmer une version spécifique de ce système d'exploitation pour chacune de ces machines, il est alors connu d'en réaliser une seule version qui soit capable d'être exécutée par un autre système d'exploitation « de base », qui est lui-même déjà disponible pour ces différentes machines. On dira alors que ce système d'exploitation portable s'exécute « au-dessus » du système d'exploitation de base de la machine.

Par exemple, le système d'exploitation « GCOS7 » de «Bull» (marques déposées) peut être utilisé sous la forme d'un environnement logiciel constituant une machine virtuelle, dénommée «V7000» ou « Diane », fonctionnant elle-même sur toute machine matérielle pourvue du système d'exploitation «Windows NT» de Microsoft (marques déposées). Ainsi, les applications développées pour un ordinateur utilisant «GCOS7», tel que le «DPS7000 » de la société Bull, peuvent être utilisées sur toute machine sur laquelle existe une version de «Windows NT».

Pour éviter tout conflit entre ces différents systèmes d'exploitation qui utilisent selon des règles différentes les ressources disponibles, chacun d'eux doit alors utiliser une partie différente de ces ressources, en particulier pour la mémoire. La cohabitation de plusieurs programmes hétérogènes, c'est à dire utilisant des systèmes d'exploitation différents, occupera donc au total plus de ressources que s'ils en partageaient une partie, pour les données qu'ils ont en commun.

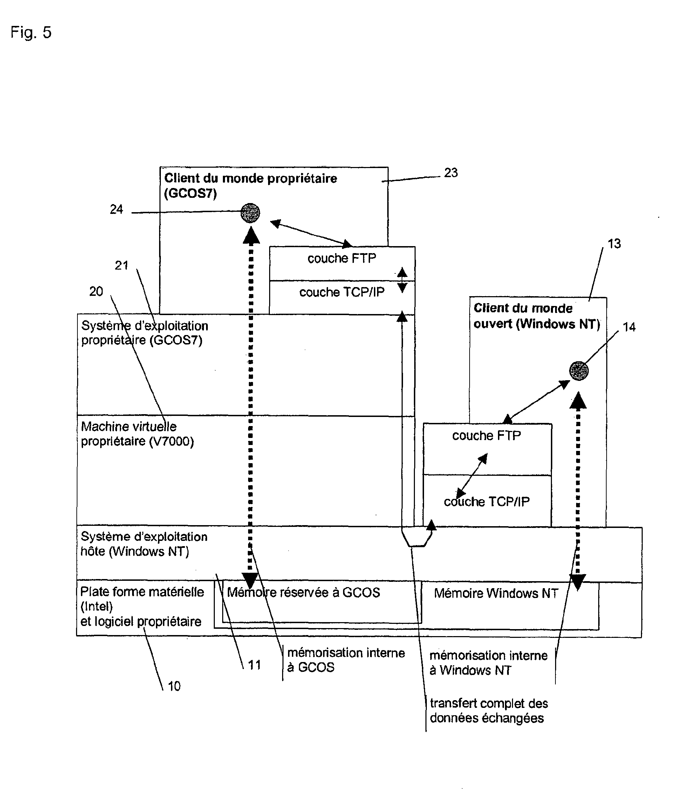

De plus, les données ou objets logiciels devant être communiqués entre un programme et un autre, ou entre deux de leurs processus, doivent être traités par un protocole de communication compatible avec les deux systèmes, comme un échange de fichier. Un tel protocole d'échange de fichier peut être par exemple par un protocole tel que FTP (« File Transfer Protocol »), ainsi qu'illustré en figure 5. Or, pour être compatible avec plusieurs systèmes d'exploitation différents, de tels protocoles de communication passent par un certain nombre d'étapes intermédiaires de complexités croissantes. Ces étapes sont réalisées d'abord pour organiser dans un format commun les données à envoyées, puis pour décoder ce format et remettre ces données dans la forme adéquate une fois reçues. Ces différentes étapes correspondent par exemple aux différentes « couches de communication » telles que définies par l'OSI. Dans le cas du protocole FTP, ces données pourront par exemple être sérialisées, puis codées selon le protocole TCP/IP, puis transmises selon le protocole FTP, avant d'être décodées et mémorisées par le processus destinataire.

De telles étapes causent un ralentissement important dans les communications entre deux processus soumis à deux systèmes d'exploitation différents, ainsi qu'une complexité source d'erreurs ou de risques, alors que les données sont mémorisées dans la même machine ou plate-forme matérielle.

Par ailleurs, il est également très important, pour la fiabilité comme pour la sécurité des applications, que le fonctionnement de l'un des systèmes d'exploitation et de ses applications ne risque pas d'interférer dans le fonctionnement de l'autre. L'accès et l'utilisation, par chacun d'eux, des ressources de la plate-forme matérielle doivent donc être organisés d'une façon la plus étanche possible entre les deux environnements.

Pour diminuer les problèmes de maintenance ou de suivi des applications, il est également important que les fonctionnalités permettant la cohabitation impliquent le moins possible de modification, aussi bien dans les applications concernées que dans les différents composants des systèmes d'exploitation devant cohabiter et communiquer.

Pour éviter de retarder l'un des processus lors d'un transfert de données entre deux processus hétérogènes, il est également utile pour un processus émetteur de pouvoir mettre des données à la disposition d'un autre processus selon une méthode asynchrone, c'est à dire sans attendre que le destinataire soit prêt ou disponible.

Le document EP-A-1 1 162 536 divulgue un procédé de communication entre au moins deux processus informatiques exécutés dans un système informatique comprenant un processeur unique et des moyens de mémorisation dont au moins une partie constitue une zone de mémoire adressable, utilisable comme mémoire de travail.

Ces processus informatiques sont exécutés au sein de systèmes d'exploitation différents, gérant l'utilisation des ressources du système par leurs processus informatiques respectifs.

Plus spécifiquement, EP-A-1 1 162 536 vise à résoudre le problème du contrôle d'une pluralité de systèmes d'exploitation destinés à s'exécuter sur un processeur unique d'un système informatique. Il décrit ainsi un programme de contrôle apte à commander les exécutions des systèmes d'exploitation du système informatique de façon alternative pour le partage des ressources de l'unique processeur Ainsi, les processus informatiques ne sont jamais exécutés en même temps via leurs systèmes d'exploitation respectifs, mais séquentiellement.

On notera qu'il est précisé que le programme de contrôle est exécuté par l'un seulement des deux systèmes d'exploitation. Ce programme de contrôle permet de commuter les exécutions des deux systèmes d'exploitation.

Enfin, le procédé de communication de données décrit en référence à la figure 6 de ce document et mis en oeuvre par le programme de contrôle est en fait un procédé de notification d'événements rassemblés dans une zone de mémoire gérée par le programme de contrôle via le premier système d'exploitation.

Le document « Systèmes à mémoire partagée » de Emmanuel Chailloux, document Internet daté du 15 novembre 1998, XP002240830, <URL :http://www.pps.jussieu.fr/~emmanuel/Public/enseignement/POD_98_WWW/p w6/node1.html>, divulgue le fonctionnement, à l'aide de sémaphores et d'un principe d'exclusion mutuelle, d'un système de traitement parallèle à mémoire partagée entre processus s'exécutant a priori sur un même système d'exploitation. Il ne décrit pas l'exécution, en même temps, de processus s'exécutant sur des systèmes d'exploitation différents.

La présente invention a donc pour objet de pallier des inconvénients de l'art antérieur en proposant un procédé permettant une grande rapidité de communication entre des processus clients fonctionnant dans des systèmes d'exploitation non directement compatibles.

La présente invention a également pour objet de pallier des inconvénients de l'art antérieur en proposant un procédé permettant une telle communication de façon asynchrone.

La présente invention a également pour objet de pallier des inconvénients de l'art antérieur en proposant un procédé permettant d'assure une fiabilité et une sécurité du fonctionnement d'au moins un des systèmes d'exploitation par rapport au comportement de processus clients non connus.

La présente invention a également pour objet de pallier des inconvénients de l'art antérieur en proposant un procédé permettant d'ajouter un mécanisme de communication dans une architecture hétérogène sans effectuer de modifications majeures sur l'ensemble des systèmes d'exploitation existant.

Ce but est atteint par un procédé de communication tel que défini dans la revendication indépendante 1.

De façon optionnelle, un procédé de communication selon l'invention peut en outre comporter l'une ou plusieurs des caractéristiques supplémentaires définies dans les revendications dépendantes 2 à 9.

L'invention, avec ses caractéristiques et avantages, ressortira plus clairement à la lecture de la description faite en référence aux dessins annexés dans lesquels :

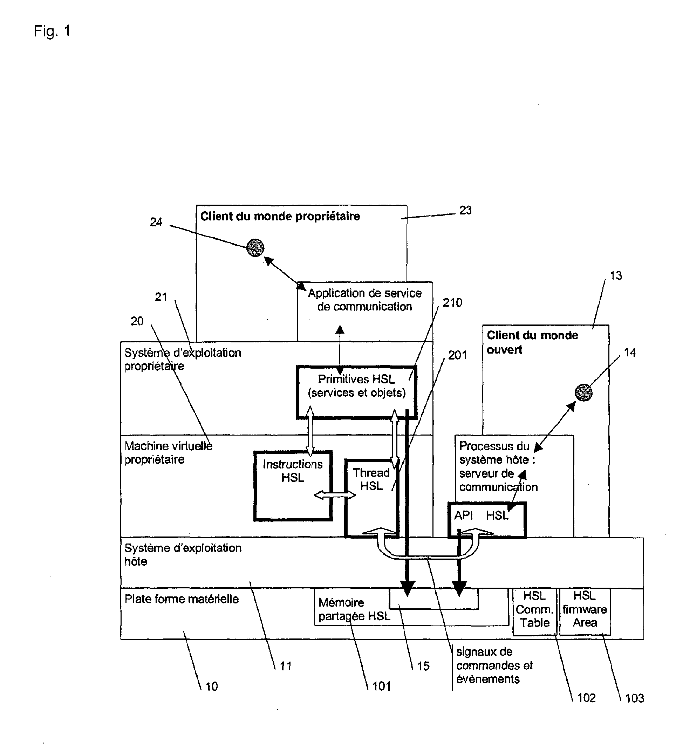

- la figure 1 représente un schéma symbolique de fonctionnement de l'invention dans un mode de réalisation où l'un des processus client est exécuté par un système d'exploitation propriétaire, lui-même exécuté dans une machine virtuelle, elle-même fonctionnant dans le système d'exploitation de l'autre processus client ;

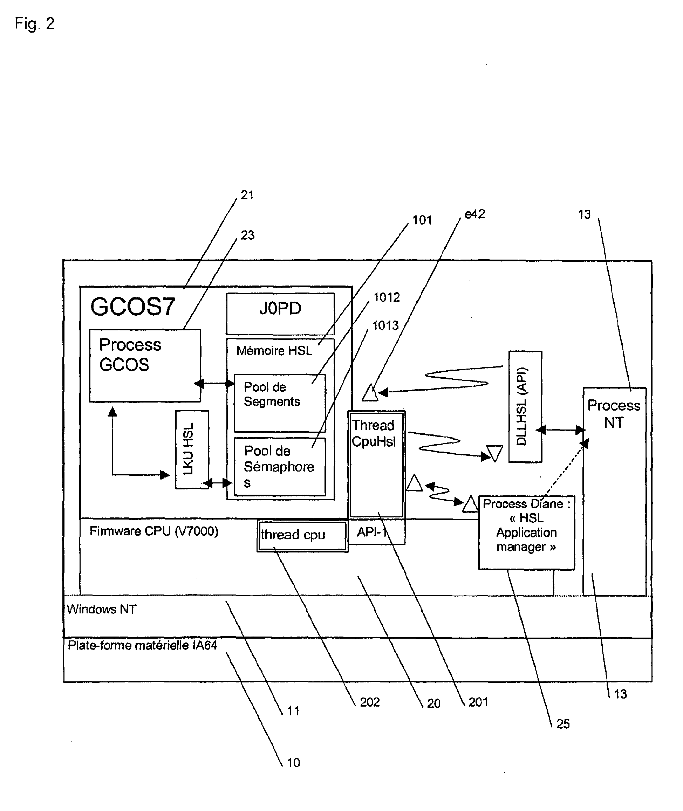

- la figure 2 représente un schéma de l'organisation des couches logicielles d'une plate-forme mettant en oeuvre l'invention, dans un mode de réalisation ou la machine virtuelle est du type Diane utilisant un système d'exploitation du type «GCOS7», et fonctionne dans une plate-forme matérielle fonctionnant sous «Windows NT» ;

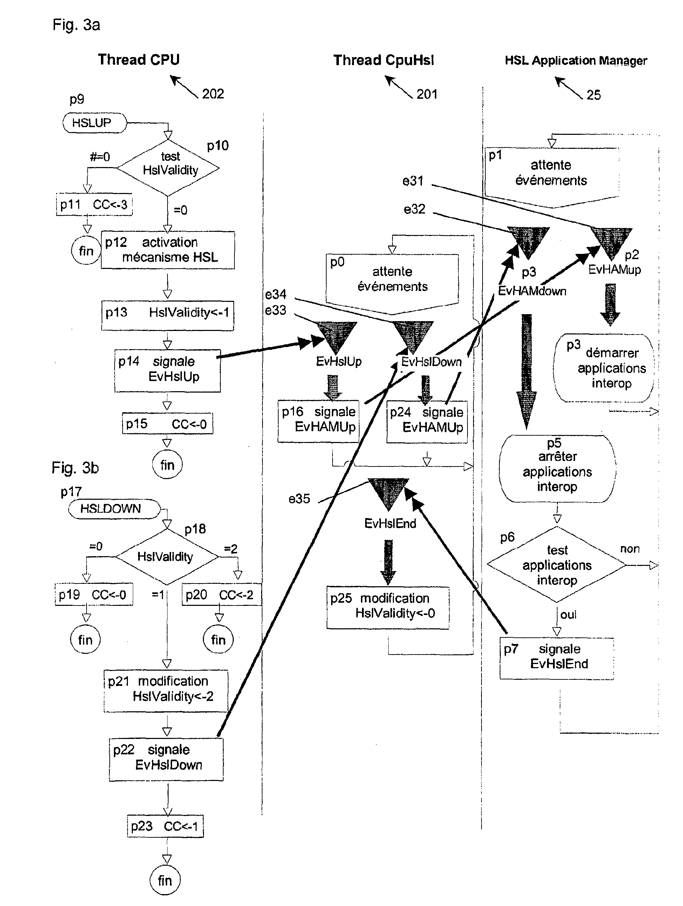

- les figures 3a et 3b représentent un organigramme présentant en parallèle le fonctionnement: du processus propriétaire de la machine virtuelle, du processus moteur d'échange, et du gestionnaire d'échange d'applications, respectivement dans les cas d'activation du mécanisme d'échange et de désactivation du mécanisme d'échange ;

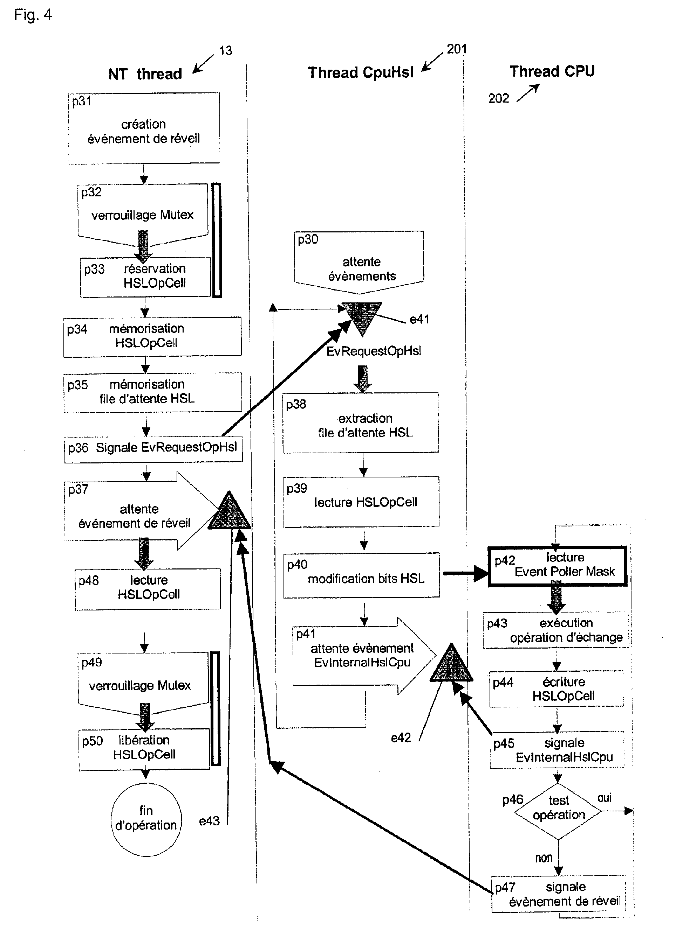

- la figure 4 représente un organigramme présentant en parallèle le fonctionnement : d'un processus client de type «Windows NT», du processus moteur d'échange, et du processus propriétaire de la machine virtuelle, dans un cas de demande d'une opération d'échange par le processus client « Windows NT » ;
- la figure 5 représente un schéma symbolique de fonctionnement d'un système selon l'art antérieur, utilisant une communication par protocole FTP et TCP/IP.

Avant d'aborder la description de l'invention, il est nécessaire de préciser les notions suivantes.

Au sein d'une plate-forme matérielle, constituée d'un ordinateur ou de plusieurs composants d'ordinateur fonctionnant comme un seul ordinateur, le terme « mémoire adressable » est ici employé pour désigner un espace mémoire fourni par des moyens de mémorisation, lorsque les éléments ou sous-ensemble de cet espace mémoire sont accessibles directement par des données repérant leur position à l'intérieur de cet espace mémoire. Ces données d'adresse peuvent être utilisées directement ou à travers des intermédiaires constituant un adressage indirect, mais les éléments désignés par cette adresse conservent une position constante pendant une durée prolongée, de façon à ce qu'un programme ou tout autre agent ou objet logiciel puisse accéder à une partie de cet espace mémoire sans se préoccuper du reste. Les adresses d'une zone de mémoire affectée à un usage déterminé peuvent être affectées à un espace de mémoire physique adressable, pour une telle durée prolongée, cette opération pouvant alors être appelée « mapping » en anglais. La rapidité d'accès à une partie d'un tel espace de mémoire adressable est ainsi peu dépendante de la quantité de mémoire qu'il contient, et de la nature des opérations effectuées sur d'autres parties de cet espace mémoire adressable.

Dans la présente description, on désignera par l'appellation « processus » unitaire un enchaînement d'instructions exécutées dans la continuité l'une de l'autre, en fonction des conditions définies par ces mêmes instructions. Cela correspond à l'élément unitaire d'exécution à l'intérieur d'un programme ou application, et est en général désigné en anglais sous le nom de « thread », qui évoque le « fil » des instructions enchaînées.

Le terme « processus », « process » en anglais, est ici utilisé pour désigner un ou plusieurs « thread » prévus pour fonctionner en partageant un même espace mémoire.

Le terme « mémoire de travail » est ici utilisé pour désigner un ou plusieurs espaces de mémoire adressable, structurés et réservés pour être utilisés par les différents processus exécutés dans le cadre d'un même système d'exploitation ou d'un même environnement propriétaire. Cette mémoire de travail comprend le plus souvent de la mémoire dite mémoire vive (ou RAM pour Random Access Memory) qui est très rapide d'accès, mais peut également comporter des espaces mémoires réservés de façon provisoire ou permanente sur des dispositifs de mémoire de masse tels que des disques durs, moins rapides mais moins coûteux et non volatils.

Dans le cadre d'un environnement logiciel comportant un logiciel propriétaire et/ou un système d'exploitation, le terme « événement » désigne ici la survenue d'une action simple, mise en oeuvre (ou « signalée ») par un agent logiciel ou un processus. Une telle action est signalée en tant qu'action atomique, ou indivisible, et peut être détectée par d'autres agents ou processus sans qu'il soit nécessaire de désigner de destinataire. Un tel événement peut être identifié dans sa nature, par un nom ou un code d'identification, sans nécessiter d'autres paramètres. Qu'il soit répété une ou plusieurs fois, un événement peut être détecté par un processus, à l'intérieur d'un environnement ou d'un groupe déterminé de processus où cet événement est « visible ». Chaque processus détectant un événement peut alors décider s'il est concerné ou non, en fonction de la nature de cet événement.

Lorsqu'un processus ou un thread effectue une ou plusieurs opérations portant sur un objet logiciel déterminé, il peut avoir besoin de s'assurer qu'aucun autre agent n'interviendra pendant ces opérations. Par exemple pour réaliser un ensemble indivisible d'opérations. Un type de mécanisme logiciel connu est utilisé dans ce but, appelé verrou ou « lock ». Un tel mécanisme est en général réalisé en modifiant de façon provisoire une certaine donnée, que tout agent devra consulter avant d'effectuer une action sur l'objet logiciel ainsi protégé. Dans l'environnement «Windows NT», un « mutex » (pour « Mutual Exclusive » en anglais) est un type de verrou prévu par le système d'exploitation.

Dans un mode de réalisation représenté en figure 1, l'invention est utilisée pour mettre en communication deux processus clients exécutés chacun par un système d'exploitation différent (21, respectivement 11).

Ces deux systèmes d'exploitation sont exécutés chacun sur une plate-forme, ou machine, et gèrent chacun l'utilisation des ressources vis à vis du processus client qui dépend de lui.

Dans ce mode de réalisation, l'un de ces systèmes d'exploitation est un système d'exploitation (21) dit « propriétaire », c'est à dire littéralement « qui appartient spécifiquement à un constructeur ». Selon les applications, il peut s'agir d'un système d'exploitation spécialement dédié à quelques machines matérielles, spécifiques ou simplement peu répandues. Il peut s'agir également d'un système d'exploitation pour lequel il est nécessaire de payer des droits lors de la commercialisation d'un logiciel se disant compatible ou adapté à cet environnement. A titre d'exemple dans la présente, l'invention sera décrite à travers un tel mode de réalisation où ce système propriétaire est le système «GCOS7», développé et maintenu par la société «BULL».

Dans un autre mode de réalisation (non représenté), un tel système d'exploitation peut être utilisé sur une plate-forme matérielle spécialement adaptée pour cela, ou sur une plate-forme matérielle elle-même gérée par un environnement logiciel spécifique à la plate-forme, dit logiciel propriétaire (« Firmware » en anglais). Dans un tel cas, le système d'exploitation utilise les ressources de la plate-forme, pour le compte de son ou ses processus clients, en envoyant des commandes au logiciel propriétaire sous la forme d'instructions, par exemple appelées « primitives » pour le système «GCOS7».

Dans le mode de réalisation décrit ici, le système d'exploitation propriétaire (21) est utilisé pour gérer les ressources d'une plate-forme qui est elle-même logicielle et non matérielle. Cette plate-forme logicielle, dite machine virtuelle (20), comprend alors un ensemble de logiciels incluant un logiciel propriétaire, le « Firmware CPU », l'ensemble de ces logiciels fonctionnant pour reproduire vis à vis du système d'exploitation propriétaire (21) le même comportement qu'une machine matérielle, et utilisant pour cela les mêmes primitives (210). Cette machine virtuelle (20) fonctionne elle-même sur une plate-forme matérielle (10) par l'intermédiaire du système d'exploitation, dit système d'exploitation hôte (11), de cette plate-forme matérielle. Dans l'exemple utilisant «GCOS7», la machine virtuelle est un ensemble de logiciels appelé «V7000» ou «DIANE», fonctionnant sur une plate-forme matérielle sous «Windows NT».

Dans ce mode de réalisation, le procédé selon l'invention permet une communication entre d'une part un processus client (23), dit propriétaire, travaillant dans le système d'exploitation propriétaire (21) de la machine virtuelle (20), et d'autre part un processus client (13) dit ouvert, par exemple un processus de type «Windows NT», travaillant directement dans le système d'exploitation hôte (11) de la plate-forme matérielle (20), par exemple une plate-forme à architecture 64bits et dotée d'un ou plusieurs processeurs « ITANIUM » de la société INTEL (marques déposées).

Dans d'autres modes de réalisation non représentés ici, le procédé selon l'invention peut être utilisé pour permettre une communication entre d'une part un processus client exécuté par un système d'exploitation propriétaire (par exemple «GCOS7») fonctionnant directement sur une plate-forme matérielle propriétaire (par exemple un ordinateur «DPS7000»), et d'autre part un processus client d'un monde ouvert (par exemple «Windows NT») exécuté par un système d'exploitation fonctionnant dans une machine virtuelle ou un émulateur au sein de la plate-forme matérielle propriétaire (le «DPS7000»).

De même, le procédé selon l'invention peut être utilisé pour permettre une communication entre des processus clients fonctionnant sous d'autres systèmes d'exploitation, par exemple de type UNIX.

De même, le procédé selon l'invention peut être utilisé pour permettre une communication entre des processus clients exécutés par plus de deux systèmes d'exploitation différents, fonctionnant sur la même plate-forme matérielle.

De même, le procédé selon l'invention peut également être utilisé pour permettre une communication entre processus clients exécutés par plusieurs systèmes d'exploitation propriétaires. Ces systèmes d'exploitation peuvent également fonctionner dans plusieurs machines virtuelles différentes réunies sur la même plate-forme matérielle.

Dans un autre mode de réalisation (non représenté), le moteur d'échange est exécuté dans le logiciel propriétaire de la plate-forme matérielle.

Dans ce mode de réalisation, le principe de fonctionnement de l'invention comprend l'utilisation d'un procédé fonctionnant comme un mécanisme logiciel appelé HSL (pour « High Speed Link », soit Liaison Haute Vitesse en anglais) dans l'exemple utilisant le système «GCOS7» comme système d'exploitation propriétaire.

Plutôt que de transmettre des données, telles que des valeurs ou états, entre les deux processus clients (13, 23), ce mécanisme HSL permet à un de ces processus clients d'écrire directement dans la mémoire de travail, à travers le bus mémoire de la plate-forme, les données (24, 14) qui doivent être transmises à l'autre processus client, ou être utilisées ou modifiées par lui. Dans la mémoire d'échange (101), ces données sont alors mémorisées en tant que données d'échange (15), et sont accessibles au même endroit par l'un ou l'autre des processus clients (13, 23) hétérogènes.

Dans la mémoire de travail de la plate-forme matérielle (10), ce mécanisme HSL comprend en particulier l'utilisation commune aux deux processus clients (23, 13) d'une ou plusieurs zones de mémoire, dite mémoire partagée HSL ou mémoire d'échange (101). L'utilisation de cette mémoire d'échange est commune, ou partagée, au sens où des mêmes zones ou adresses de mémoire sont utilisées par plusieurs des processus clients communiquant selon le mécanisme HSL.

Cette mémoire d'échange (101) contient en particulier certaines données ou objets logiciels devant être transmis d'un processus (13, 23) client à un autre, ou devant pouvoir être utilisés par plusieurs de ces processus clients. Ainsi, lorsqu'un processus client émetteur veut mémoriser ou modifier un objet logiciel devant être lu ou testé par un autre processus client destinataire, c'est à dire un objet d'échange faisant partie des données d'échange (15), il va mémoriser cet objet d'échange dans la mémoire d'échange (101). C'est alors ces mêmes données que le processus client destinataire va lire à l'endroit même de cette mémoire d'échange commune où l'émetteur les aura mémorisées.

Le fait pour chaque processus client d'écrire ou de lire directement cet objet d'échange dans une partie adressable de la mémoire de travail lui permet d'effectuer cette opération avec une rapidité similaire à celle dont il dispose pour son propre fonctionnement à l'intérieur de son système d'exploitation. C'est à dire avec une rapidité proche de l'optimum des performances du système informatique mis en oeuvre.

Du fait que les objets d'échange sont mémorisés dans une partie commune de la mémoire de la plate-forme matérielle, chaque processus client peut modifier ou lire chacun de ces objets d'échange indépendamment des actions ou de l'état des autres processus clients qui y ont accès, c'est à dire de façon asynchrone. Le fonctionnement de chaque processus client peut ainsi être programmé avec une grande liberté vis à vis des éléments extérieurs à ce processus. L'aspect asynchrone des transmissions de données permet également une grande rapidité de fonctionnement de chacun de ces processus clients, puisqu'il n'a pas besoin d'attendre ni de vérifier la disponibilité de son correspondant lors d'une transmission d'objet d'échange.

Ce mécanisme HSL comprend également l'utilisation d'un processus dit moteur d'échange (201), par exemple un processus unitaire (désigné par le mot « thread » en anglais) noté « thread CpuHsl ».

Ce moteur d'échange (201) comprend un processus qui est exécuté en boucle tout au long de la durée d'activité ou de validité du mécanisme HSL. Ce moteur d'échange à en particulier pour rôle de centraliser les demandes d'accès à la mémoire d'échange (101), et d'assurer ainsi une cohérence et une unité des traitements.

Cette unité de traitement permet en particulier d'assurer que chaque action d'un processus client dans la mémoire d'échange se fasse d'une façon complète et indivisible, ou atomique, du point de vue des autres processus clients pouvant y accéder.

Ce mécanisme HSL permet ainsi d'assurer une certaine fiabilité et sécurité dans l'utilisation de la mémoire, en constituant une voie d'accès encadrée et contrôlée par laquelle doivent passer toutes les actions de chaque processus client voulant accéder à une partie de la mémoire de travail impliquant d'autres processus ou programmes. Ces fiabilité et sécurité permettent en particulier de protéger des données ou programmes sensibles, en eux-même ou pour le fonctionnement du système, vis à vis d'actions à risque pouvant venir d'un processus client contenu dans un programme malveillant ou dont le fonctionnement n'est pas au point ou ne respecte pas correctement les règles correspondant à l'un des éléments du système.

Pour que ce mécanisme HSL fonctionne correctement, un certain nombre d'éléments doivent être en fonctionnement, validés et disponibles. L'activation et la validation de ce mécanisme peuvent être commandées, depuis le système d'exploitation ou depuis un processus, par une commande d'activation.

Lorsque la désactivation de ce mécanisme HSL est commandée, l'arrêt du mécanisme passe par une phase de fermeture (« shutdown » en anglais) pendant laquelle, les opérations d'échange déjà entamées sont menées à leur terme, sans qu'aucune nouvelle opération d'échange ne soit acceptée.

En cours de fonctionnement, chaque processus client peut agir sur des données mémorisées dans la mémoire d'échange (101), par différentes opérations, dites opérations d'échange. Ces opérations effectuent un certain nombre d'actions spécifiques et codifiées, et peuvent être mises en oeuvres à l'aide de paramètres réglant leur comportement.

Ces opérations d'échange sont implémentées dans chacun des différents systèmes d'exploitation (11, 21), de façon à être accessibles au programmeur d'un processus client par l'utilisation au sein de son code programme d'une instruction spécifique à chacune de ces opérations d'échange. Ces instructions sont fournies au programmeur sous la forme d'une bibliothèque d'instructions adaptée au système d'exploitation dans lequel il travaille.

Dans ce mode de réalisation, ainsi qu'illustré en figure 2, pour un processus client (23) propriétaire sous «GCOS7», ces opérations seront implémentées dans une bibliothèque (210) de primitives appelée LKU HSL. Pour un processus client sous «Windows NT», ces instructions seront implémentées en tant que des API (« Application Program Interface ») accessibles dans une bibliothèque (110) de type DLL appelée DLL HSL.

Il est donc ainsi possible au programmeur d'un programme fonctionnant sous l'un ou l'autre des systèmes d'exploitation concernés d'adapter son programme pour qu'il soit capable d'utiliser le mécanisme HSL. Du fait de la codification des opérations d'échanges et de leur disponibilité sous une forme accessible directement dans l'environnement de programmation, une telle adaptation est possible sans changer de langage de programmation, et avec une quantité limitée de modifications ou réécritures.

La gestion de l'ensemble de ce mécanisme HSL comprend l'utilisation d'un processus (25) gestionnaire interapplication, appelé HAM, pour l'anglais « HSL Application Manager » dans l'exemple illustré ici.

Ce gestionnaire interapplication (25) a en particulier pour rôle de coordonner l'utilisation du mécanisme HSL par les différentes applications ou processus clients concernés. Il s'agit en particulier de prévenir ces différentes applications de l'activation du mécanisme HSL, ou lorsque celui-ci va être fermé, pour leur permettre de prendre leurs dispositions et réagir de façon adéquate.

Dans le mode de réalisation décrit ici, la mémoire d'échange est structurée en une suite d'objets logiciels, ou objets d'échange, ou objets HSL, présentant une ou plusieurs structures spécifiques. Dans l'exemple décrit ici, les objets d'échange présentent des structures basées sur des objets logiciels tels que définis dans le système d'exploitation propriétaire «GCOS7»(21).

Le système d'exploitation «GCOS7» utilise une mémoire de travail répartie en portions dénommées segments. Les différents segments de la mémoire de travail sont répertoriés dans une structure logicielle comportant un certain nombre de tables numérotées, ces tables comprenant elles-mêmes un certain nombre d'entrées. Lors de l'attribution d'une zone de mémoire à différents segments de la mémoire de travail, ou « mapping » de ces segments, chacune de ces entrées peut alors contenir l'adresse d'une zone de mémoire qui est attribuée à un de ces segments.

Dans la mémoire de travail, un segment peut être ainsi désigné de façon non ambiguë à travers une donnée dite descripteur de segment et notée SD, qui comporte les éléments suivants :
- STN (Segment Table Number) : numéro de la table contenant l'adresse du segment en question ;
- STE (Segment Table Entry) : numéro d'entrée dans la table définie par STN, cette entrée contenant l'adresse du segment en question dans la mémoire de la plate-forme matérielle.

Au sein du système d'exploitation «GCOS7» sont définis un certain nombre d'objets logiciels structurés, appelés sémaphores, qui sont définis dans le système «GCOS7» en tant qu'éléments de son « décor intérieur ». Ces sémaphores peuvent être testés par les processus fonctionnant sous «GCOS7», et peuvent être modifiées par eux en utilisant des opérations spécifiques définies elles aussi dans ce décor intérieur.

Ces sémaphores comportent avant tout une donnée notée « SCT » servant de compteur, assortie d'une donnée notée « MaxCount » correspondant à sa valeur maximale autorisée dans une utilisation donnée.

Un sémaphore peut être de type simple, noté « SN », ou à message, noté « SM ». Un sémaphore à message est un sémaphore auquel est associé une donnée constituant un pointeur indiquant une zone de mémoire où peut être mémorisé un message comprenant d'autres données (d'au plus 4 mots de 4 octets, pour «GCOS7»). Ce message peut par exemple contenir une valeur à transmettre, ou l'adresse en mémoire de données ou objets logiciels à transmettre.

Un sémaphore peut être désigné de façon non ambiguë à travers le descripteur de segment (SD) désignant le segment de mémoire contenant ce sémaphore, suivi d'une donnée notée « SRA » (Segment Relative Address) indiquant la position relative du début du sémaphore dans le segment désigné.

Des opérations de base utilisables pour agir sur un sémaphore comportent en particulier la réservation et la libération, ainsi que l'incrémentation et la décrémentation d'un sémaphore, à travers des instructions spécifiques au système «GCOS7». Ces instructions sont codées par un code d'opération et comportent l'utilisation d'un registre mémoire dit registre général pour transmettre un paramètre désignant le sémaphore à utiliser.

La réservation et la libération d'un sémaphore sont réalisées par des instructions notées respectivement « GETSEM » et « FREESEM ». La réservation d'un sémaphore correspond à la demande d'attribution exclusive d'un sémaphore au processus demandeur. Cette exclusivité permet en particulier de garantir que ce sémaphore ne sera pas modifié par un autre processus pendant le temps où le demandeur effectuera ses opérations sur ce sémaphore. La libération d'un sémaphore correspond à la remise du sémaphore à la disposition du système d'exploitation et des autres processus voulant y accéder.

L'incrémentation et la décrémentation d'un sémaphore sont réalisées par des instructions notées respectivement « V-OP » et « P-OP ».

Les sémaphores peuvent être utilisés à de multiples tâches au sein d'un ou plusieurs processus clients sous «GCOS7», et ce type d'objets logiciels existe également dans d'autres systèmes d'exploitation non cités ici. Des sémaphores peuvent être utilisés par exemple pour garder la trace d'un nombre d'opérations effectuées sur un objet logiciel par un ou plusieurs processus ne se connaissant pas directement.

Ils peuvent être utilisés pour synchroniser plusieurs processus, par exemple en maintenant l'un d'eux en attente tant que le sémaphore n'aura pas atteint une certaine valeur. Il suffit alors de faire incrémenter le sémaphore par l'autre processus lorsqu'il est prêt pour une synchronisation. Ils peuvent être utilisés pour gérer une file d'attente de tâches ou d'objets à traiter.

Dans le mode de réalisation décrit ici, le procédé selon l'invention comporte l'utilisation commune d'une mémoire d'échange (101). Cette mémoire d'échange est utilisée par des processus clients (13, 23) hétérogènes, à travers des opérations déterminées portant sur des objets logiciels, ou objets d'échange, appartenant à cette mémoire d'échange.

Dans l'exemple décrit ici et utilisant un système «GCOS7» fonctionnant sur une plate-forme «Windows NT», la mémoire d'échange comprend des objets d'échange structurés selon des formats spécifiques au système «GCOS7». Ces objets d'échanges sont en particulier des segments de mémoire au format «GCOS7», ainsi que des sémaphores de type «GCOS7», avec ou sans messages.

La mémoire d'échange HSL est une partie de la mémoire de travail du système «GCOS7», par exemple au sein de la mémoire vive ou RAM de la plate-forme matérielle, affectée au mécanisme HSL. Cette affectation est faite par exemple lors du démarrage du système «GCOS7», par un processus noté J0PD qui est celui exécuté en premier dans ce cas.

Cette mémoire d'échange est réservée par ce processus J0PD et organisée en plusieurs groupes d'objets d'échange, ou « pools », qui regroupent des objets d'échanges des différents types disponibles pour les processus utilisant le mécanisme HSL.

Une partie de la mémoire d'échange est constituée d'objets HSL de type sémaphores, avec ou sans message, répartis en un ou plusieurs groupes appelés pools de sémaphores (1011).

Une autre partie de la mémoire d'échange est constituée d'objets HSL comprenant essentiellement de l'espace mémoire divisé en segments, répartis en groupes appelés pools de segments (1012).

Pour manipuler ces objets d'échange de type «GCOS7», le procédé selon l'invention comporte l'implémentation de commandes et instructions supplémentaires, ajoutées aux deux systèmes d'exploitation concernés. Il peut également s'agir de commandes existantes, dont mode le de fonctionnement est adapté par des modifications de certains composants du logiciel propriétaire (firmware) ou du système d'exploitation auquel elles appartiennent.

Ces commandes nouvelles ou modifiées comprennent d'une part des commandes de manipulation des objets d'échange dans la mémoire d'échange (101), ces commandes fonctionnant de manière similaire aux commandes existant dans le système «GCOS7» pour manipuler des objets de types similaires, en particulier les sémaphores.

Ces commandes nouvelles ou modifiées comprennent d'autre part des commandes de gestion du mécanisme HSL en lui-même.

Les commandes de gestion du mécanisme HSL sont implémentées à l'intérieur du logiciel propriétaire de la machine virtuelle, «V7000» ou «DIANE». Ces commandes sont lancées par un opérateur, humain ou logiciel, à travers un jeu d'instructions internes faisant partie du « décor intérieur » de la machine virtuelle.

Cette gestion interne du mécanisme HSL utilise en particulier une zone de mémoire du système «GCOS7», spécifique au mécanisme HSL, notée « HSLControlArea ». Cette zone de mémoire HSLControlArea (non représentée sur les figures) contient en particulier des informations concernant les objets du monde propriétaire, ou natif («GCOS7»), qui sont utilisés par le mécanisme HSL.

Les instructions suivantes permettent respectivement le démarrage et l'arrêt du mécanisme HSL :
- HSLUP
- HSLDOWN

Les instructions suivantes permettent la manipulation d'objets d'échange de type sémaphore depuis un processus client du monde «GCOS7» :
- HSLGETSEM : permet la réservation, dans la mémoire d'échange (101) (ou mémoire partagée HSL), d'un sémaphore HSL, par un processus client en vue d'opérations d'échange à venir ;
- HSLFREESEM : permet la libération dans la mémoire d'échange (101) (ou mémoire partagée HSL), d'un sémaphore HSL, par un processus client, après opérations d'échange ;
- V-OP : est l'opération inchangée du système «GCOS7», utilisable également pour incrémenter un sémaphore réservé dans la mémoire HSL ;
- P-OP : est l'opération inchangée du système «GCOS7», utilisable également pour décrémenter un sémaphore réservé dans la mémoire HSL.

Les mêmes opérations peuvent être effectuées sur un sémaphore HSL depuis un processus client du monde «Windows NT», à travers des outils logiciels de type API, ajoutées à l'environnement «Windows NT». Dans leur programmation, ces API utilisent des instructions ajoutées au logiciel propriétaire de la machine virtuelle. Ces instructions sont programmées dans la machine virtuelle pour se comporter vis à vis des objets d'échange de la même façon que les instructions HSL du système «GCOS7». Ces instructions suivantes permettent alors la manipulation d'objets d'échange de type sémaphore depuis un processus client du monde «Windows NT», et comprennent les instructions suivantes :
- Sim-HSLGETSEM : instruction accessible par les API et reproduisant ou simulant le fonctionnement de l'instruction HSLGETSEM ;
- Sim-HSLFREEMEM : instruction accessible par les API et reproduisant ou simulant le fonctionnement de l'instruction HSLFREESEM ;
- SimHSLV-OP : instruction accessible par les API et reproduisant ou simulant le fonctionnement de l'instruction V-OP ;
- SimHSLP-OP : instruction accessible par les API et reproduisant ou simulant le fonctionnement de l'instruction P-OP.

Au sein du système d'exploitation «GCOS7», certaines primitives sont modifiées pour permettre le fonctionnement du mécanisme HSL, et certaines primitives sont ajoutées. Ces modifications comprennent en particulier les procédures ou macros suivantes :
- H_VMM_HSL_INIT : nouvelle procédure ajoutée dans le noyau logiciel (« NUCLEUS ») du système d'exploitation. Cette procédure réalise une initialisation des éléments du mécanisme HSL, par exemple en effectuant la déclaration ou l'ouverture de la table (102) de communication HSL et de la zone de contrôle propriétaire (103). Elle permet également le verrouillage des opérations d'échange, en réservant pour cela le premier des sémaphores (SN) au sein de la mémoire d'échange (101). Elle prépare également, dans une structure logicielle notée « HSLUP_STRUCT », les paramètres qui seront utilisés par l'instruction HSLUP pour activer le mécanisme HSL.
- H_NIPS_EPRD : est une modification de la procédure « NIPS » de «GCOS7», permettant l'appel de la procédure H_VMM_HSL_INIT.
- $H_DCSBE et $H_TSTDECOR : sont des déclaratives du système «GCOS7», qui sont modifiées par l'ajout d'un bit spécifiquement utilisé par le mécanisme HSL, au sein d'un octet de capabilité (CAPB13). Cette modification de l'octet de capabilité permet de mémoriser le fait que le système est apte à utiliser le mécanisme HSL.
- H_SSMGET_HSL: nouvelle primitive du système «GCOS7», utilisée par l'instruction HSLGETSEM pour réserver un sémaphore dans la mémoire d'échange.
- H_SSMFREE_HSL: nouvelle primitive du système «GCOS7», utilisée par l'instruction HSLFREESEM pour libérer un sémaphore réservé auparavant dans la mémoire d'échange.
- H_TASKM_IGHSL et H_TASKM_IFHSL : nouveaux points d'entrée, ou syntaxes d'appel, des procédures H_TASKM_IGSM et H_TASKM_IFSM du système «GCOS7». Ces points d'entrée sont utilisés pour la réservation et la libération de sémaphores, dans le cas où ces sémaphores sont des données d'échange utilisées par le mécanisme HSL.
- H_VMM_JTAB : modification de cette procédure, incluse dans le module logiciel « VMM» du système «GCOS7», pour introduire la déclaration d'objets logiciels (« H_HSL_TABLE ») relatifs à la table de communication HSL.
- H_VMM_IISDCR : modification de cette procédure, incluse dans le module logiciel « VMM» du système «GCOS7», pour supprimer le contrôle « $H_ISDCR » qui devient inutile et risquerait de causer des interactions néfastes dans la gestion des segments de mémoire utilisés par le mécanisme HSL.
- $H_VMM_SICID : modification de cette primitive, incluse dans le module logiciel « VMM » du système «GCOS7», pour introduire l'identification (« SICID ») de la nouvelle procédure H_VMM_HSL_INIT.

Les API utilisées par les processus client du monde «Windows NT» sont regroupées dans une ou plusieurs bibliothèques de liens dynamiques de type DLL, pour l'anglais « Dynamic Link Library ». Les API contenues dans ces bibliothèques sont directement accessibles par ces processus, dès lors que les fichiers DLL contenant ces bibliothèques sont présents dans les répertoires contenant le système «Windows NT».

Cette accessibilité par simple copie d'un nouveau fichier, ou de quelques nouveaux fichiers, est un des éléments qui permet une grande modularité et une facilité d'adaptation du système, lors de la mise en place du procédé selon l'invention.

Ces bibliothèques comprennent en particulier des API de gestion de la zone de communication, qui comprend la table de communication HSL (102) et la zone de contrôle (103), ou leur reflet dans le monde «Windows NT» :
- La fonction CreateHSLInterfaceArea crée l'espace de communication nécessaire au mécanisme HSL (c'est à dire, entre autres, la table de communication, la zone de contrôle, la table des pointeurs et les pointeurs associés) ainsi que les évènements (« event ») et verrous (« mutex » pour « mutual exclusive ») communs.
- La fonction OpenHSLlnterfaceArea ouvre cet espace de communication nécessaire au mécanisme HSL.
- La fonction CloseHSLInterfaceArea ferme cet espace de communication nécessaire au mécanisme HSL.
- La fonction GetHSLInterfaceAreaAddress retourne le pointeur sur l'espace de communication nécessaire au mécanisme HSL, et fournit ainsi l'adresse permettant l'accès à cet espace de communication.
- Les fonctions InComTable et OutComTable gèrent le verrouillage de la table de contrôle.

Ces bibliothèques comprennent également des API de manipulation des sémaphores HSL du monde «GCOS7» par les processus du monde «Windows NT» :
- La fonction GetSemaphoreHSL permet d'obtenir un sémaphore HSL de type sans message (HSL_SEM_TYPE_SN) ou avec message (HSL_SEM_TYPE_SM). La demande de sémaphore émane d'un process NT. Le thread CPU va devoir exécuter une instruction « Sim-HSLGETSEM », qui simule du côté NT l'instruction GETSEM native de « GCOS7 ».
- La fonction FreeSemaphoreHSL permet de libérer un sémaphore HSL. La demande de libération du sémaphore émane d'un process NT.
   Le thread CPU va devoir exécuter une « Sim-HSLFRESEM ».
- La fonction POPonSemaphoreSN permet d'effectuer une opération de type P-OP sur un sémaphore HSL sans message.
   Cette API envoie une demande de P-OP vers le thread CpuHsl et attend sur l'événement passé en paramètre, d'être réveillé.
- La fonction POpOnSemaphoreSM permet d'effectuer une opération de type P-OP, côté NT, sur un sémaphore HSL avec message. Cette API envoie une demande de P-OP vers le thread CpuHsl et attend sur l'événement passé en paramètre, d'être réveillé.
- La fonction VOpOnSemaphoreSN permet, côté NT, de faire une VOP sur un sémaphore HSL sans message.
   Cette API envoie une demande de V-OP sur un sémaphore HSL et attend sur l'événement passé en paramètre d'être réveillé quand l'opération est terminée.
- La fonction VOpOnSemaphoreSM permet, côté NT, de poster un message sur un sémaphore HSL avec message.
   Cette API envoie une demande de V-OP sur un sémaphore HSL et attend sur l'événement passé en paramètre d'être réveillé quand l'opération est terminée.

Ces bibliothèques comprennent également des API de gestion de la mémoire d'échange (101), ou mémoire HSL partagée entre les deux mondes, (affectation et libération de segments de mémoire réservés à ce mécanisme HSL) :
- la fonction MapReadHSLSegment donne le pointeur sur une portion de mémoire «V7000» aux applications NT utilisatrices de HSL (portion qui correspond à un petit segment de «GCOS» soit 64 ko). Cette API est appelée par les processus NT pour les fonctions gérant les caractéristiques du mécanisme HSL relatives à l'allocation et libération d'espace mémoire.
- la fonction MapWriteHSLSegment donne le pointeur sur une portion de mémoire «V7000» aux applications NT utilisatrices de HSL (portion qui correspond à un petit segment de «GCOS» soit 64 ko). Cette API est appelée par les processus NT pour les fonctions gérant les caractéristiques du mécanisme HSL relatives à l'allocation et libération d'espace mémoire.
- la fonction UnmapHSLSegment enlève la vue sur une portion de mémoire «V7000» côté NT (portion qui correspondait à un segment de «GCOS7»).

Ces bibliothèques comprennent également des API d'accès à la zone de commande du mécanisme HSL (ouverture et fermeture de l'accès à la table de communication HSL, dont un sous-ensemble est noté « HslTable ») :
- la fonction mapHSLTable donne le pointeur sur chacun des 2 segments de la Table HSL gardés dans la HSLFirmwareArea. Cette API est appelée par HSL à l'initialisation coté NT. Elle rend les pointeurs NT sur les 2 segments de type 0 contenant la table de contrôle logiciel de HSL : « HslTable ».
- la fonction UnmapHSLTable enlève la vue sur les 2 segments de la HSL_Table, côté NT
Cette API est appelée par HSL à la terminaison de HSL (suite à HSLDOWN).
Elle détruit la visibilité des segments de la table de contrôle logiciel de HSL (HslTable).

Dans ce mode de réalisation, ainsi que représenté en figure 4, le moteur d'échange (201) est animé par un processus unitaire (« thread cpuhsl ») exécuté au sein de la machine virtuelle (20), de façon à être capable de détecter des évènements signalés par aussi bien par un processus client (23) du monde propriétaire (21) que par un processus client (13) du monde ouvert (11), c'est à dire dans l'exemple l'environnement «Windows NT».

L'exécution de ce processus unitaire est commandée et paramétrée par des primitives ou instructions internes du système d'exploitation propriétaire (21), par exemple de type macros publiques, interagissant avec l'environnement logiciel propriétaire qui anime la machine virtuelle (20). Pour la mise en oeuvre du mécanisme HSL, certaines primitives du système «GCOS7» sont modifiées et certaines primitives supplémentaires sont ajoutées et implémentées comme décrit plus haut.

Ainsi qu'illustré en figure 4, l'interaction du processus réalisant le moteur d'échange (201) avec les processus clients (13, 23) et avec le processus propriétaire, également appelé « thread cpu », se fait en particulier à travers
- d'une part la signalisation d'évènements par un émetteur dans l'environnement logiciel du destinataire ;
- d'autre part la mémorisation par l'émetteur, dans un emplacement connu du destinataire, de données ou paramètres à transférer.

Cette mémorisation de paramètres se fait en particulier dans des zones de mémoire, notées « HSLCommunicationTable » (102) et « HSLFirmwareArea » (103), dont l'adresse est connue des processus qui ont besoin d'y accéder.

La communication entre les processus (13, 23) clients et le moteur d'échange (201) utilise une zone mémoire appelée table de communication HSL (102) (ou « HSLCommunicationTable »). Cette table de communication HSL, située dans la mémoire de travail de la plate-forme matérielle (10), comprend un tableau composé d'une pluralité d'emplacements de mémoire, dits cellules opératoires et notés « HSLOpCell », de structures identiques et repérées au sein de la table (102) par un index ou numéro d'entrée.

Une fois le mécanisme HSL activé, lorsqu'un processus client, par exemple un processus NT (13), c'est à dire fonctionnant sous « Windows NT », veut demander une opération d'échange sur un objet logiciel de la mémoire d'échange (101), ce processus client commence par définir en interne la nature et les paramètres de cette opération d'échange.

Il va alors d'une part créer (étape p31) et préparer un événement de réveil (e43), unique et nouveau, représenté par exemple par un code incrémental, et obtenir (p33) une cellule opératoire HSLOpCell libre dans la table de communication HSL (102), et y mémoriser (p34) les références de ce nouvel événement (e43) de réveil, ainsi que des données représentant l'opération d'échange demandée et ses paramètres. Pour éviter les opérations incomplètes ou d'autres interactions, cette mémorisation dans HSLOpCell se fait après verrouillage (p32) de la table de communication HSL (102) à l'aide d'un verrou « Mutex » du système d'exploitation « Windows NT ».

Il va d'autre part mémoriser (p35) dans une file d'attente de type FIFO (« premier entré premier sorti »), dite file d'attente HSL, les références de cette cellule opératoire HSLOpCell, et signaler (p36), de façon visible par le moteur d'échange (201), un événement connu EvRequestOpHsl (e41) signifiant la présence dans cette file d'attente d'une nouvelle demande d'opération d'échange.

Le processus client (13) va alors se mettre (p37) en sommeil, en attendant de détecter la signalisation de l'événement (e43) de réveil unique qu'il a créé et mémorisé dans la cellule opératoire HSLOpCell.

Entre deux opérations et lorsque le mécanisme HSL est activé, le moteur d'échange « thread cpuhsl » (201) est en sommeil ou en boucle, en attente (p30) d'une nouvelle demande d'opération, par exemple une opération d'échange ou de désactivation.

Lorsqu'il détecte un événement EvRequestOpHsl (e41) signalant une nouvelle demande d'opération d'échange, le moteur d'échange extrait (p38) de la file d'attente HSL les références de la cellule opératoire HSLOpCell contenant les données de cette demande.

Il lit alors les références de cette cellule opératoire et les mémorise dans une zone mémoire appelée zone de contrôle propriétaire HSL (103) (ou « HSLfirmwarearea »).

A partir de ces références, le moteur d'échange lit (p39) dans la table de communication HSL (102) le contenu de la cellule opératoire, et l'interprète pour déterminer la nature et les paramètres de l'opération d'échange demandée.

Par sa communication avec le processus propriétaire (thread cpu) dans la machine virtuelle (firmware cpu de la machine «V7000»), il initialise les conditions nécessaires à la réalisation de cette opération d'échange. Dans l'exemple, cette initialisation se fait par la modification (p40) d'un ou plusieurs bits déterminés, dits « bits HSL », à l'intérieur d'un registre, noté « event poller mask », dont la constitution ajuste le fonctionnement de la détection des évènements par le processus propriétaire « thread cpu » (202) ou processus cpu.

Le moteur d'échange (201) se met (p41) alors en sommeil, en attente d'un événement connu, noté « EvInternalHslCpu» (e42), lui signifiant que l'opération d'échange à été traitée par le processus propriétaire (202).

Lors d'une boucle survenant après la modification (p40) du registre « event poller mask », le processus propriétaire « thread cpu » (202) prend (p42) en compte le contenu de ce registre, ce qui le conduit donc à réaliser (p43) l'opération d'échange correspondante.

La réalisation (p43) de cette opération comprend en particulier la lecture, dans la zone propriétaire (HSLfirmwarearea) des références de la cellule opératoire. Dans cette cellule opératoire, le processus propriétaire peut alors lire la nature et les paramètres de l'opération d'échange demandée, ainsi que les références de l'événement de réveil correspondant à cette opération d'échange.

En fonction du résultat de cette opération d'échange, le processus propriétaire écrit (p44) dans une partie de la cellule opératoire HSLOpCell un code, dit code complémentaire ou code condition et noté « CC », représentant ce résultat. Il signale (p45) alors un événement EvInternalHslCpu (e42), réveillant ainsi le moteur d'échange (201).

Si les conditions le permettent, par exemple si l'opération d'échange est complète ou n'est pas une opération considérée (p46) comme bloquante, le processus propriétaire « thread cpu » signale (p47) alors l'événement de réveil (e43) attendu par le processus client (13) à l'origine de la demande.

Une fois réveillé, le processus client (thread NT) peut alors lire dans la cellule opératoire le code complémentaire CC représentant le résultat de l'opération d'échange qu'il avait demandé. Il va alors mémoriser (p48) le résultat de cette opération dans ses paramètres de fonctionnement internes pour pouvoir en tenir compte lors de la suite de son fonctionnement.

Une fois l'opération d'échange achevé, le processus client peut alors libérer la (p50) cellule opératoire de la table de communication HSL (102) qui a été utilisée pour cette opération d'échange. Pour éviter les opérations incomplètes ou d'autres interactions, cette libération de la cellule opératoire HSLOpCell se fait après verrouillage (p49) de la table de communication HSL (102) à l'aide d'un verrou « Mutex » du système d'exploitation « Windows NT ».

On comprend que la présence du moteur d'échange permet aux processus clients de demander des opérations d'échange sans avoir à intervenir à l'intérieur du logiciel propriétaire (20), et en particulier sans accéder au registre « event poller mask ». Il est donc possible d'offrir à ces processus clients des opérations d'échange leur permettant d'accéder directement à la mémoire de travail de la machine virtuelle, par exemple «V7000», sans leur permettre d'intervenir sur ces éléments qui sont à la fois vitaux pour le fonctionnement de l'ensemble et peu protégés contre des erreurs de programmation.

Ce moteur d'échange constitue donc un processus tampon, géré par la machine virtuelle et donnant un accès limité depuis l'extérieur, apportant donc une bonne sécurité et fiabilité tout en permettant un accès rapide aux données communes de la mémoire d'échange.

Le gestionnaire interapplication (25) comprend en particulier un processus unitaire (« thread » en anglais) fonctionnant en boucle, et illustré en figures 3a et 3b.

Au cours de son fonctionnement normal, ce processus unitaire, ou thread HAM, est en attente (p1) d'un ou plusieurs évènements, correspondant en particulier à une demande d'activation ou de fermeture du mécanisme HSL au sein du système. Lorsqu'il détecte un de ces évènements, le thread HAM échange les informations correspondantes avec différentes applications, dites applications interop, utilisant des processus fonctionnant dans plusieurs systèmes d'exploitation et utilisant le mécanisme HSL.

A l'issue de ces échanges d'informations avec les applications interop, le thread HAM peut signaler un ou plusieurs évènements rendant compte de l'achèvement de ces échanges et de leur résultat.

Les éléments du mécanisme HSL sont initialisés ou préparés, pour être mis à disposition des processus clients (13, 23), à travers l'utilisation d'une commande notée « HSLUP ».

A réception (étape p9) de cette instruction HSLUP, un processus unitaire du logiciel propriétaire de la machine virtuelle, noté thread CPU (202), commence par vérifier l'état de fonctionnement de ce mécanisme HSL. Pour cela, le thread CPU vérifie (p10) dans la zone de contrôle propriétaire HSL, ou HSLFirmwareArea (103), la valeur d'une donnée notée HslValidity, et en déduit l'état actuel du mécanisme HSL. Si cette donnée a une valeur différente de 0, le thread CPU termine l'instruction HSLUP en renvoyant (p11) un code complémentaire, noté « CC » d'une valeur de 3, ce qui indique que le mécanisme HSL n'est pas inactif.

Si le mécanisme HSL est inactif, le thread CPU (202) effectue (p12) les opérations d'activation de ce mécanisme HSL et mémorise cette activation en mémorisant (p13) la valeur 1 dans le champ HsIValidity de la HSLFirmwareArea (103). De façon à assurer la complète exécution de cette activation, sans risquer d'interaction avec une autre instruction qui pourrait lui arriver en cours de traitement, le thread CPU réalise cette modification (13) de HslValidity sous la protection d'un verrou logiciel apposé sur la HSLFirmwareArea (103).

Une fois cette activation effectuée (p12) et mémorisée (p13), le thread CPU signale (p14) un événement EvHslUp (e33) indiquant cette activation, et termine l'instruction HSLUP en renvoyant (p15) un code complémentaire (CC) d'une valeur de 0, correspondant à une exécution correcte de l'instruction.

Lorsque que le moteur d'échange (201), à travers le thread CpuHsl, détecte l'événement EvHslUp (e33) ci-dessus, il signale (p16), ou émet, un événement « EvHAMUp » (e31) indiquant que le mécanisme HSL est accessible au gestionnaire interapplications (25), ou HAM, puis se remet en attente (p0) d'un événement le concernant.

Lorsque le HAM (25) détecte (p2) cet événement EvHAMUp (e31), il démarre (p3) ou relance les diverses applications interop qui étaient en attente du mécanisme HSL, ou leur indique qu'elles peuvent maintenant l'utiliser.

A réception (p17) d'une instruction « HSLDOWN » lui indiquant de fermer le mécanisme HSL, le thread CPU (202) commence par vérifier l'état de fonctionnement de ce mécanisme HSL. Pour cela, le thread CPU vérifie (p18) dans la zone de contrôle propriétaire HSL, ou HSLFirmwareArea (103), la valeur de la donnée HsIValidity, et en déduit l'état actuel du mécanisme HSL.

Si cette donnée HslValidity a une valeur de 0, le thread CPU (202) termine l'instruction HSLDOWN en renvoyant (p19) un code complémentaire (CC) d'une valeur de 0, ce qui indique que le mécanisme HSL est déjà inactif.

Si cette donnée HsIValidity a une valeur de 2, le thread CPU termine l'instruction HSLDOWN en renvoyant (p20) un code complémentaire (CC) d'une valeur de 2, ce qui indique que le mécanisme HSL est déjà en cours de fermeture.

Si cette donnée HslValidity a une valeur de 1, le thread CPU enregistre cette demande de fermeture en mémorisant (p21) la valeur 2 dans le champ HslValidity de la HSLFirmwareArea (103). De façon à assurer la complète exécution de cet enregistrement, sans risquer d'interaction avec une autre instruction qui pourrait lui arriver en cours de traitement, le thread CPU réalise cette modification de HslValidity sous la protection d'un verrou logiciel apposé sur la HSLFirmwareArea (103).

Une fois cette demande de fermeture mémorisée, le thread CPU signale (p22) un événement EvHslDown (e34) indiquant cette demande de fermeture, et termine l'instruction HSLDOWN en renvoyant (p23) un code complémentaire (CC) d'une valeur de 1, indiquant que le mécanisme HSL était actif et que la demande de fermeture a été enregistrée.

Lorsque que le moteur d'échange (201), ou thread CpuHsl, détecte l'événement EvHsIDown (e34) ci-dessus, il signale (p24), ou émet, un événement EvHAMDown (e32) indiquant au gestionnaire interapplications (25), ou HAM, que le mécanisme HSL va être fermé.

Lorsque le HAM (25) détecte (p3) cet événement EvHAMDown (e34), il demande (p5) à toutes les applications interop utilisant le mécanisme HSL de terminer leurs opérations d'échange HSL, et attend (p6) que toutes lui aient confirmé cette terminaison.

Lorsque toutes les applications interop ont cessé d'utiliser le mécanisme HSL, le HAM signale (p7) un événement EvHslEnd (e35) indiquant au moteur d'échange (201) que le mécanisme HSL n'est plus utilisé.

Lorsqu'il détecte cet événement EvHslEnd (e35), le moteur d'échange (201) enregistre la fermeture effective du mécanisme HSL en mémorisant (p25) une valeur de 0 pour le champ HslValidity de la HSLFirmwareArea (103), puis se remet (p0) en attente d'un événement le concernant.

On comprend bien que la présence de ce gestionnaire interapplication (25), ou HSL Application Manager, permet de gérer l'utilisation du mécanisme HSL par toutes les applications qui sont concernées par un simple jeu d'évènements assurant une modularité du procédé par rapport à la configuration du système. Ces évènements sont alors suffisamment spécifiques et extérieurs au mécanisme HSL et aux logiciels du système d'exploitation (21, 11) et de la machine virtuelle (20) ou matérielle (10), pour que l'utilisation de ce mécanisme dans les différentes applications y soit simple à adapter.

Du fait que les applications interop n'agissant pas directement sur les éléments moteurs du mécanisme HSL, en particulier le moteur d'échange (201) la table de communication HSL (102) et la zone de contrôle propriétaire HSL (103), les applications externes aux systèmes (11, 21) d'exploitation n'ont donc que peu d'interactions avec les éléments internes à ces systèmes d'exploitation.

En cela, le procédé selon l'invention permet donc de minimiser les risques de perturbation ou de détournement du fonctionnement de ces systèmes d'exploitation, et donc de la machine, lors de l'accès d'applications (13, 23) clientes à des objets logiciels stockés directement dans la mémoire de travail.

Dans le mode de réalisation décrit ici, pour l'exemple d'un système d'exploitation propriétaire de type «GCOS7», les zones de mémoire utilisée pour coordonner le fonctionnement du mécanisme HSL peuvent présenter en particulier les structures décrites ci-après.

La table de communication entre les APIs de «Windows NT» et le « Thread CpuHsl » présente une structure en tableau de 256 entrées ou enregistrements de structure identique, dites cellules d'opération et notées « HslOpCell ».

Chaque entrée est codée sur 32 bits et comprend les champs de données suivants :

| |
|---|
| Numéro de l'entrée |
| Status (FREE/BUSY/READ/DELIVERED/WAITING/DONE) |
| Opération simulée (Get, Free, Pop ou Vop) |
| Type (SN ou SM) |
| SID : STN-STE-SRA (identification du sémaphore) |
| ProcessID |
| Handle de l'event (sur 64 bits) (0 dans le 2^{ème} mot si l'architecture est une Intel à 32 bits) |
| Report |
| Maxcount |
| Count |
| MessageFirstWord |
| MessageSecondW ord |
| MessageThirdWord |
| MessageFourthWord |
| Filler |

- Numéro de l'entrée : index ou position de l'entrée, c'est le numéro qui est transmis au « thread CpuHsl » (valeur comprise entre 1 et 256 bornes incluses) pour lui permettre de savoir où se trouvent les paramètres de l'opération d'échange demandée ;
- Opération = nature de la demande, correspondant à une opération d'échange simulée et codifiée comme suit: GETSEM :01, FRESEM :04, POP :02 ou VOP :03 ;
- Type : type de sémaphore concerné, codifié comme suit : sémaphore sans message (SN) : type=1, ou avec message (SM) : type=2 ;
- STN-STE-SRA: adresse basée sur l'identification de segments, identifiant le sémaphore (adresse du descripteur de sémaphore «GCOS»). Ce champ dans la table (HSLCommunicationTable) est un paramètre d'entrée utilisé lors de demandes d'opérations de type POP, V-OP ou FRESEM ;
- « Handle » : code d'identification, au sein de «Windows NT», de l'évènement sur lequel le processus client appelant ou demandeur veut être réveillé en fin de traitement. Si une opération de type P-OP est bloquante, c'est sur cet événement que le processus client de type «Windows NT» restera en attente ;
- Maxcount et Count : ces champs, qui ne sont significatifs que sur une opération de type GETSEM, servent à initialiser le sémaphore ;
- Statues: état de l'entrée. Il s'agit d'un champ réservé à la gestion interne du mécanisme, et reflétant l'état d'avancement d'une demande d'opération d'échange.
- MessageFirstWord à MessageFourthWord : 4 mots de mémoire servant à transmettre les données constituant le message associé au sémaphore concerné, dans le cas d'un sémaphore à message (SM).

La zone « HSLCommunicationTable » est une structure incluse dans la zone de mémoire attribuée au mécanisme HSL, et dont l'adresse est obtenue au sein d'un processus client de type «Windows NT», par utilisation de l'API : « GetHSLInterfaceAreaAddress » de la DLLHSLInterfaces.

Le mécanisme de gestion de la table de communication HSL (ou « HSLCommunicationTable ») fait appel à une table intermédiaire d'index assurant la fiabilité de la prise en compte dans un mode « FIFO » (First In First Out) de toutes les entrées ou HslOpCell contenant une requête ou demande d'opération d'échange.

La zone de contrôle propriétaire, utilisée par le thread Cpu HSL, ou « HSLFirmwareArea », présente une structure comprenant les champs de données suivants :

| |
|---|
| Validité |
| Nombre de segments de pool de sémaphores |
| Adresse absolue «GCOS» du 1^{er} segment de pool de sémaphores |
| Adresse absolue «GCOS» du 2^{ème} segment de pool de sémaphores |
| Adresse absolue «GCOS» du 3^{ème} segment de pool de sémaphores |
| Adresse absolue «GCOS» du 4^{éme} segment de pool de sémaphores |
| STN-STE.0 du 1^{er} segment de pool de sémaphores |
| STN-STE.0 du 2^{ème} segment de pool de sémaphores |
| STN-STE.0 du 3^{ème} segment de pool de sémaphores ou 0 |
| STN-STE.0 du 4^{ème} segment de pool de sémaphores ou 0 |
| Nombre de sémaphores SN par segment de pool |
| SRA du 1^{er} SD de sémaphore SN |
| Nombre de sémaphores SM par segment de pool |
| SRA du 1^{er} SD de sémaphore SM |
| N° de segment pour prochaine allocation |
| Filler |

La zone « HSLFirmwareArea » comporte 15 mots de mémoire correspondants aux STN-STE et à l'adresse absolue «GCOS» de chaque segment du pool de sémaphores alloué (ou 0).

Ces éléments sont suivis d'un mot de mémoire donnant le nombre de segments de pools de sémaphores (2) ; suivis de 2 mots de mémoire donnant respectivement le nombre de sémaphores SN et SM et 2 autres mots de mémoire donnant les SRA des premiers sémaphores SN et SM dans chaque segment du pool de sémaphores ; suivis de 2 mots de mémoire donnant les adresses absolues de 2 segments de type0 de la table HSL

A titre d'exemple, la zone « firmware » (103) peut être dimensionnée au maximum des besoins : on prendra 4 segments de pool de sémaphores. Mais, en réalité, le mécanisme HSL n'a besoin le plus souvent que de 5000 entrées pour les sémaphores SN et 256 pour les sémaphores SM. Il ne faudra donc que 2 segments de pool de sémaphores pour contenir tous les sémaphores dont a besoin HSL.

La valeur du champ Validité (ou HslValidity) peut prendre les valeurs suivantes :
- valeur 0 quand le mécanisme HSL n'est pas opérationnel ;
- valeur 1 quand le mécanisme HSL est opérationnel ;
- valeur 2 pour indiquer que l'arrêt du mécanisme HSL est en cours.

Le numéro de segment pour la prochaine allocation indique sous la forme d'un entier de 0 à 3 dans quel segment sera effectuée la prochaine demande d'allocation.

## Revendications

1. Procédé de communication entre au moins deux processus informatiques, dits processus clients (13, 23), exécutés en même temps dans un système informatique, dit plate-forme matérielle (10), comprenant un ou plusieurs processeurs et des moyens de mémorisation dont au moins une partie constitue une zone de mémoire adressable, utilisable comme mémoire de travail, ces processus clients étant exécutés au sein de systèmes d'exploitation (11, 21) respectifs différents, gérant l'utilisation des ressources du système par leurs processus clients, la mémoire adressable de travail incluant, pour au moins une partie des données que les processus clients traitent en commun, dites données d'échange (15), au moins une partie commune, dite mémoire d'échange (101),
**caractérisé en ce que** le procédé comporte les étapes suivantes :
- stockage de ces données d'échange dans la mémoire d'échange (101),
- écriture et/ou modification d'au moins l'une de ces données d'échange par l'un quelconque des processus clients, dit processus client émetteur, à l'aide d'un mécanisme logiciel d'écriture de données à une adresse prédéterminée de la mémoire d'échange, ledit mécanisme logiciel d'écriture étant géré par le système d'exploitation exécutant le processus client émetteur,
- lecture de cette donnée d'échange écrite et/ou modifiée, par l'un quelconque des processus clients, dit processus client récepteur, à l'aide d'un mécanisme logiciel de lecture de données à l'adresse prédéterminée de la mémoire d'échange, ledit mécanisme logiciel de lecture étant géré par le système d'exploitation exécutant le processus client récepteur et différent du système d'exploitation exécutant le processus client émetteur,
et **en ce que** :
- le procédé de communication comportant l'exécution d'au moins un processus, dit moteur d'échange (201), recevant des demandes d'opérations d'échange, incluant des demandes d'écriture ou lecture ou modification de données d'échange, de la part d'au moins un processus client (13, 23) et gérant la réalisation de ces opérations d'échange, cette exécution du moteur d'échange est gérée par une plate-forme logicielle (20) sur laquelle s'exécute l'un des systèmes d'exploitation (21), cette plate-forme logicielle (20) gérant les ressources de la plate-forme matérielle pour le compte du système d'exploitation (21) qu'elle exécute,
- le mécanisme logiciel d'écriture ou de lecture, géré par le système d'exploitation dont la plate-forme logicielle (20) d'exécution gère le moteur d'échange, comprend la transmission de données de commande, à l'aide de primitives prédéfinies dans une bibliothèque logicielle (210) de ce même système d'exploitation, vers le moteur d'échange, et
- le mécanisme logiciel d'écriture ou de lecture, géré par tout autre système d'exploitation que celui dont la plate-forme logicielle (20) d'exécution gère le moteur d'échange, comprend la transmission de données de commande, à l'aide d'interfaces de programmation API prédéfinies dans ledit tout autre système d'exploitation, vers le moteur d'échange.

2. Procédé selon la revendication 1, **caractérisé en ce que** ladite adresse prédéterminée de la mémoire d'échange permet l'accès à un ou plusieurs emplacements de cette mémoire d'échange associés à ladite donnée d'échange et représente de manière constante et non ambiguë la position de ces emplacements au sein d'au moins une partie de la mémoire adressable de la plate-forme matérielle.

3. Procédé selon l'une des revendications 1 ou 2, **caractérisé en ce que** le moteur d'échange (201) s'exécute en boucle tout au long d'une durée d'activité ou de validité du mécanisme logiciel d'écriture ou de lecture de chaque système d'exploitation (11,21).

4. Procédé selon la revendication 3, **caractérisé en ce que** le moteur d'échange (201) reçoit et gère les demandes d'opérations d'échange selon les étapes suivantes :
- A: attente, par le moteur d'échange (201), d'un événement (e41) signalé par un processus client (13), dit processus demandeur, et représentant une demande d'une opération d'échange ;
- B : réception, par le moteur d'échange (201) en provenance du processus demandeur (13), de données (HslOpCell) représentant l'opération d'échange demandée ;
- C : échange, entre le moteur d'échange (201) et au moins un processus de ladite plate-forme logicielle (20) sur laquelle s'exécute le moteur d'échange (201), d'informations représentant l'opération d'échange demandée ;
- D : attente, par le moteur d'échange (201), d'un événement (e42) représentant la fin de traitement, par ladite plate-forme logicielle (20), de l'opération d'échange ;
- E : retour à l'étape A.

5. Procédé selon l'une des revendications 3 ou 4, **caractérisé en ce que** les données d'échange (15) sont structurées en un ou plusieurs objets logiciels, dits objets d'échange, mémorisés dans la mémoire d'échange (101), ces objets d'échange comprenant un ou plusieurs sémaphores dont la structure comporte au moins une donnée (COUNT) représentant la valeur courante du sémaphore, l'état de ces sémaphores pouvant être lu ou testé par les processus clients (13, 23) et pouvant être modifié à travers une ou plusieurs opérations d'échange.

6. Procédé selon la revendication 5, **caractérisé en ce que** la modification d'un objet d'échange par le processus client émetteur se fait par une ou plusieurs opérations d'échange comportant chacune les étapes suivantes :
- envoi, par le processus client émetteur, d'au moins une instruction demandant la réservation d'un objet d'échange au seul usage dudit processus client émetteur,
- envoi, par le processus client émetteur, d'une ou plusieurs instructions demandant la modification dudit objet d'échange ;
- envoi, par le processus client émetteur, d'au moins une instruction demandant la remise à disposition dudit objet d'échange à l'ensemble des autres processus clients.

7. Procédé selon l'une des revendications 3 à 6, **caractérisé en ce qu'**il comporte au moins l'exécution d'un processus (25) gestionnaire interapplications, géré par la plate-forme logicielle (20), gérant la validité des demandes d'opérations d'échange selon les étapes suivantes :
- détection, par le processus (25) gestionnaire interapplications, d'un événement (e31) indiquant que les composants mettant en oeuvre le procédé de communication sont disponibles ;
- envoi, par le processus (25) gestionnaire interapplications à au moins un processus (13, 23) client apte à utiliser des données (15) d'échange, d'informations indiquant que les composants mettant en oeuvre le procédé de communication sont disponibles ;
- détection, par le processus (25) gestionnaire interapplications, d'un événement (e32) représentant la fin de disponibilité des composants mettant en oeuvre le procédé de communication ;
- envoi, par le processus (25) gestionnaire interapplications à au moins un processus client (13, 23) apte à utiliser des données (15) d'échange, que les composants mettant en oeuvre le procédé de communication ne doivent plus être utilisés.

8. Procédé selon l'une des revendications 1 à 7, **caractérisé en ce que** les interfaces de programmation API, prédéfinies dans tout autre système d'exploitation que celui dont la plate-forme logicielle (20) d'exécution gère le moteur d'échange, utilisent des instructions programmées dans ladite plate-forme logicielle (20) pour se comporter vis-à-vis des données d'échange de la même façon que les instructions des primitives prédéfinies dans la bibliothèque logicielle (210) du système d'exploitation dont la plate-forme logicielle (20) d'exécution gère le moteur d'échange.

9. Procédé selon l'une des revendications 1 à 8, **caractérisé en ce que** les interfaces de programmation API, prédéfinies dans tout autre système d'exploitation que celui dont la plate-forme logicielle (20) d'exécution gère le moteur d'échange, sont regroupées dans une ou plusieurs bibliothèques logicielles de liens dynamiques DLL.

## Patentansprüche

1. Verfahren zum Kommunizieren zwischen wenigstens zwei Datenverarbeitungsprozessen, Client-Prozesse (13, 23) genannt, die gleichzeitig in einem Datenverarbeitungssystem, Hardware-Plattform (10) genannt, ausgeführt werden, das einen oder mehrere Prozessoren sowie Speichermittel umfasst, von denen wenigstens ein Teil eine adressierbare Speicherzone bildet, die als Arbeitsspeicher benutzt werden kann, wobei diese Client-Prozesse innerhalb von jeweiligen unterschiedlichen Betriebssystemen (11, 21) ausgeführt werden, die die Nutzung von Ressourcen des Systems durch ihre Client-Prozesse verwalten, wobei der adressierbare Arbeitspeicher für wenigstens einen Teil der die Client-Prozesse gemeinsam verarbeitenden Daten, Austauschdaten (15) genannt, wenigstens einen gemeinsamen Teil beinhaltet, Austauschspeicher (101) genannt,
**dadurch gekennzeichnet, dass** das Verfahren die folgenden Schritte beinhaltet:
- Speichern dieser Austauschdaten im Austauschspeicher (101),
- Schreiben und/oder Ändern von wenigstens einem Element dieser Austauschdaten mit einem beliebigen der Client-Prozesse, Client-Sendeprozess genannt, mit Hilfe eines Software-Mechanismus zum Schreiben von Daten auf eine vorbestimmte Adresse des Austauschspeichers, wobei der Software-Schreibmechanismus durch das Betriebssystem verwaltet wird, das den Client-Sendeprozess ausführt,
- Lesen dieses geschriebenen und/oder geänderten Austauschdatenelements durch einen beliebigen der Client-Prozesse, Client-Empfängerprozess genannt, mit Hilfe eines Software-Mechanismus zum Lesen von Daten an der vorbestimmten Adresse des Austauschspeichers, wobei der Software-Lesemechanismus von dem Betriebssystem verwaltet wird, das den Client-Empfängerprozess ausführt und das sich von dem den Client-Sendeprozess ausführenden Betriebssystem unterscheidet,
und dadurch, dass:
- das Kommunikationsverfahren das Ausführen von wenigstens einem Prozess beinhaltet, Austauschmotor (201) genannt, der Austauschoperationsbefehle empfängt, die Befehle zum Schreiben oder Lesen oder Ändern von Austauschdaten seitens wenigstens eines Client-Prozesses (13, 23) beinhalten und die Realisierung dieser Austauschoperationen verwalten, wobei dieser Ablauf des Austauschmotors durch eine Software-Plattform (20) verwaltet wird, auf der eines der Betriebssysteme (21) läuft, wobei diese Software-Plattform (20) die Ressourcen der Hardware-Plattform für das Betriebssystem (21) verwaltet, das sie ausführt,
- der Software-Schreib- und -Lesemechanismus, der von dem Betriebssystem verwaltet wird, dessen Software-Ausführungsplattform (20) den Austauschmotor verwaltet, die Übertragung von Befehlsdaten beinhaltet, mit Hilfe von vordefinierten Primitiven in einer Software-Bibliothek (210) desselben Betriebssystems zu dem Austauschmotor, und
- der Software-Schreib- und -Lesemechanismus, der von einem anderen Betriebssystem als dem verwaltet wird, dessen Software-Ablaufplattform (20) den Austauschmotor verwaltet, die Übertragung von Befehlsdaten, mit Hilfe von vordefinierten API-Programmierungsschnittstellen in dem anderen Betriebssystem zum Austauschmotor beinhaltet.

2. Verfahren nach Anspruch 1, **dadurch gekennzeichnet, dass** die vorbestimmte Adresse des Austauschmotors den Zugriff auf eine oder mehrere Stellen dieses Austauschmotors zulässt, die mit dem Austauschdatenelement assoziiert sind, und auf konstante und eindeutige Weise die Position dieser Stelle innerhalb von wenigstens einem Teil des adressierbaren Speichers der Hardware-Plattform repräsentiert.

3. Verfahren nach Anspruch 1 oder 2, **dadurch gekennzeichnet, dass** der Austauschmotor (201) für die gesamte Aktivitäts- oder Validitätsdauer des Software-Schreib- oder -Lesemechanismus jedes Betriebssystems (11, 21) in einer Schleife läuft.

4. Verfahren nach Anspruch 3, **dadurch gekennzeichnet, dass** der Austauschmotor (201) die Austauschoperationsanforderungen gemäß den folgenden Schritten empfängt und verwaltet:
- A: Warten, durch den Austauschmotor (201), auf ein Ereignis (e41), das durch einen Anforderungsprozess genannten Client-Prozess (13) signalisiert wird, der eine Austauschoperationsanforderung repräsentiert;
- B: Empfangen, durch den Austauschmotor (201), von die angeforderte Austauschoperation repräsentierenden Daten (HslOpCell) von dem Anforderungsprozess (13);
- C: Austauschen von die angeforderte Austauschoperation repräsentierenden Informationen zwischen dem Austauschmotor (201) und wenigstens einem Prozess der Software-Plattform (20), auf der der Austauschmotor (201) läuft;
- D: Warten, durch den Austauschmotor (201), auf ein Ereignis (e42), das das Ende der Verarbeitung der Austauschoperation durch die Software-Plattform (220) repräsentiert;
- E: Zurückkehren zu Schritt A.

5. Verfahren nach Anspruch 3 oder 4, **dadurch gekennzeichnet, dass** die Austauschdaten (15) in einem oder mehreren Austauschobjekte genannten, im Austauschspeicher (101) gespeicherten Software-Objekten strukturiert sind, wobei diese Austauschobjekte ein oder mehrere Semaphore umfassen, deren Struktur wenigstens ein Datenelement (COUNT) beinhaltet, das den laufenden Wert des Semaphors repräsentiert, wobei der Zustand dieser Semaphore von den Client-Prozessen (13, 23) gelesen oder getestet und über eine oder mehrere Austauschoperationen geändert werden kann.

6. Verfahren nach Anspruch 5, **dadurch gekennzeichnet, dass** die Änderung eines Austauschobjekts durch den Client-Sendeprozess über eine oder mehrere Austauschoperationen erfolgt, die die folgenden Schritte beinhalten:
- Senden, durch den Client-Sendeprozess, von wenigstens einem Befehl, der die Reservierung eines Austauschobjekts für eine einzige Benutzung des Client-Sendeprozesses anfordert,
- Senden, durch den Client-Sendeprozess, von einem oder mehreren Befehlen, die das Ändern des Austauschobjekts anfordern,
- Senden, durch den Client-Sendeprozess, von wenigstens einem Befehl, der das Wiederzurverfügungstellen des Austauschobjekts dem Satz von anderen Client-Prozessen anfordert.

7. Verfahren nach einem der Ansprüche 3 bis 6, **dadurch gekennzeichnet, dass** es wenigstens die Ausführung eines Inter-Applikation-Verwaltungsprozesses (25) beinhaltet, verwaltet durch die Software-Plattform (20), der die Validität der angeforderten Austauschoperationen gemäß den folgenden Schritten verwaltet:
- Erkennen, durch den Inter-Applikation-Verwaltungsprozess (25), eines Ereignisses (e31), das anzeigt, dass die das Kommunikationsverfahren ausführenden Komponenten zur Verfügung stehen;
- Senden, durch den Inter-Applikation-Verwaltungsprozess (25), von Informationen, die anzeigen, dass die das Kommunikationsverfahren ausführenden Komponenten verfügbar sind, zu wenigstens einem Client-Prozess (13, 23), der die Austauschdaten (15) nutzen kann;
- Erkennen, durch den Inter-Applikation-Verwaltungsprozess (25), eines Ereignisses (e32), das das Ende der Verfügbarkeit der das Kommunikationsverfahren ausführenden Komponenten repräsentiert;
- Senden, durch den Inter-Applikation-Verwaltungsprozess (25), zu wenigstens einem Client-Prozess (13, 23), der die Austauschdaten (15) nutzen kann, dass die das Kommunikationsverfahren ausführenden Komponenten nicht mehr benutzt werden dürfen.

8. Verfahren nach einem der Ansprüche 1 bis 7, **dadurch gekennzeichnet, dass** die API-Programmierungsschnittstellen, die in einem ganz anderen Betriebssystem vordefiniert sind als dem, dessen Software-Ausführungsplattform (20) den Austauschmotor verwaltet, Befehle benutzen, die in der Software-Plattform (20) programmiert werden, so dass sie sich gegenüber den Austauschdaten genauso verhalten wie die Befehle der vordefinierten Primitiven in der Software-Bibliothek (210) des Betriebssystems, dessen Software-Ausführungsplattform (20) den Austauschmotor verwaltet.

9. Verfahren nach einem der Ansprüche 1 bis 8, **dadurch gekennzeichnet, dass** die API-Programmierungsschnittstellen, die in einem ganz anderen Betriebssystem als dem vordefiniert sind, dessen Software-Ausführungsplattform (20) den Austauschmotor verwaltet, in ein oder mehrere Software-Bibliotheken mit dynamischen DLL-Verbindungen gruppiert werden.

## Claims

1. Method for communication between at least two computer processes, called client processes (13, 23), executed at the same time in a computer system, called a hardware platform (10), comprising one or more processors and storage means, at least a part of which constitutes an addressable memory area that can be used as a working memory, these client processes being executed in different respective operating systems (11, 21), managing the utilization of the resources of the system by their client processes, the addressable working memory including, for at least a part of the data which the client processes process in common, called exchange data (15), at least one common part, called exchange memory (101),
**characterised in that** the method comprises the following steps:
- the storage of these exchange data in the exchange memory (101),
- the writing and/or modification of at least one of these exchange data by any one of the client processes, called sending client process, with the aid of a software mechanism for writing data to a predetermined address of the exchange memory, said software mechanism for writing being managed by the operating system executing the sending client process,
- the reading of this written and/or modified exchange data by any one of the client processes, called destination client process, with the aid of a software mechanism for reading data at the predetermined address of the exchange memory, said software mechanism for reading being managed by the operating system executing the destination client process and different to the operating system executing the sending client process,
and **in that**:
- the method of communication comprising the execution of at least one process, called exchange engine (201), receiving requests for exchange operations, including requests for writing or reading or modification of exchange data, on the part of at least one client process (13, 23) and managing the completion of these exchange operations, this execution of the exchange engine is managed by a software platform (20) on which one of the operating systems (21) is executed, this software platform (20) managing the resources of the hardware platform on behalf of the operating system (21) that it executes,
- the software mechanism for writing or reading, managed by the operating system the executing software platform (20) of which manages the exchange engine, comprises the sending of control data, with the aid of primitives predefined in a software library (210) of this same operating system, to the exchange engine, and
- the software mechanism for writing or reading, managed by any operating system other than the one the executing software platform (20) of which manages the exchange engine, comprises the sending of control data, with the aid of API programming interfaces predefined in said any other operating system, to the exchange engine.

2. Method according to claim 1, **characterised in that** said predetermined address of the exchange memory permits access to one or more locations of this exchange memory associated with said exchange data and represents in a constant and unambiguous manner the position of these locations in at least a part of the addressable memory of the hardware platform.

3. Method according to one of claims 1 or 2, **characterised in that** the exchange engine (201) is executed in a loop throughout a period of activity or validity of the software mechanism for writing or reading of each operating system (11, 21).

4. Method according to claim 3, **characterised in that** the exchange engine (201) receives and manages the requests for exchange operations in accordance with the following steps:
- A: waiting, by the exchange engine (201), for an event (e41) signalled by a client process (13), called requesting process, and representing a request for an exchange operation;
- B: the reception, by the exchange engine (201) from the requesting process (13), of data (HslOpCell) representing the requested exchange operation;
- C: the exchange, between the exchange engine (201) and at least one process of said software platform (20) on which the exchange engine (201) is executed, of information representing the requested exchange operation;
- D: waiting, by the exchange engine (201), for an event (e42) representing the end of processing, by said software platform (20), of the exchange operation;
- E: a return to step A.

5. Method according to one of claims 3 or 4, **characterised in that** the exchange data (15) are structured in one or more software objects, called exchange objects, stored in the exchange memory (101), these exchange objects comprising one or more semaphores the structure of which comprises at least one datum (COUNT) representing the current value of the semaphore, the state of these semaphores being capable of being read or tested by the client processes (13, 23) and capable of being modified by means of one or more exchange operations.

6. Method according to claim 5, **characterised in that** the modification of an exchange object by the sending client process is effected by one or more exchange operations each comprising the following steps:
- the sending, by the sending client process, of at least one instruction requesting the reservation of an exchange object for the sole use of said sending client process,
- the sending, by the sending client process, of one or more instructions requesting the modification of said exchange object,
- the sending, by the sending client process, of at least one instruction requesting that said exchange object be made available again to all the other client processes.

7. Method according to one of claims 3 to 6, **characterised in that** it comprises at least the execution of an interapplication manager process (25), managed by the software platform (20), managing the validity of the requests for exchange operations in accordance with the following steps:
- the detection, by the interapplication manager process (25), of an event (e31) indicating that the components implementing the method of communication are available;
- the sending, by the interapplication manager process (25) to at least one client process (13, 23) capable of utilising exchange data (15), of information indicating that the components implementing the method of communication are available;
- the detection, by the interapplication manager process (25), of an event (e32) representing the end of availability of the components implementing the method of communication;
- the sending, by the interapplication manager process (25) to at least one client process (13, 23) capable of utilising exchange data (15), of information indicating that the components implementing the method of communication must not be used any more.

8. Method according to one of claims 1 to 7, **characterised in that** the API programming interfaces, predefined in any operating system other than the one the executing software platform (20) of which manages the exchange engine, utilise instructions programmed in said software platform (20) in order to react to the exchange data in the same way as the instructions of the primitives predefined in the software library (210) of the operating system the executing software platform (20) of which manages the exchange engine.

9. Method according to one of claims 1 to 8, **characterised in that** the API programming interfaces, predefined in any operating system other than the one the executing software platform (20) of which manages the exchange engine, are grouped in one or more DLL dynamic link software libraries.
